# EUROPEAN PATENT APPLICATION

(11) **EP 2 042 273 A1**
(43) Date of publication of application: **01.04.2009**
(21) Application number: 08014773.9
(22) Date of filing: 20.08.2008
(51) Int. Cl.: B25J 9/08, B25J 19/00

(54) **Industrial robot**

(30) Priority: 27.09.2007 JP 2007252053
(71) Applicant: Fanuc Ltd, Yamanashi 401-0597 (JP)
(72) Inventor: Nihei, Ryo, Minamitsuru-gun Yamanashi 401-0597 (JP); Kinoshita, Satoshi, Minamitsuru-gun Yamanashi 401-0597 (JP); Takikawa, Ryuji, Minamitsuru-gun Yamanashi 401-0597 (JP)
(74) Representative: Thum, Bernhard

(57) **Abstract**

An industrial robot (1) capable of being decomposed into multiple units (2,3,4) at the time of conveyance of the robot, said units being conveyed individually, wherein each of the units has a holding bracket (13,23,27) for conveyance means to hold the unit in order to convey the unit.

## Description

### BACKGROUND OF THE INVENTION

### 1. Field of the invention

The present invention relates to an industrial robot that can be decomposed into multiple units at the time of conveyance or transport of the robot and can be thus conveyed or transported in individual units.

### 2. Description of Related Art

A vehicle such as a truck is used for transporting an industrial robot over a long distance from the production plant to the site of utilization of the robot. When the robot is bulky and of heavy weight, the limit of the loading capacity of the vehicle may be exceeded, and it may become necessary to decompose the robot into multiple units in order to transport it. When the robot is of heavy weight, it has to be conveyed or transported in units to the place of installation in the factory by using forklifts or cranes.

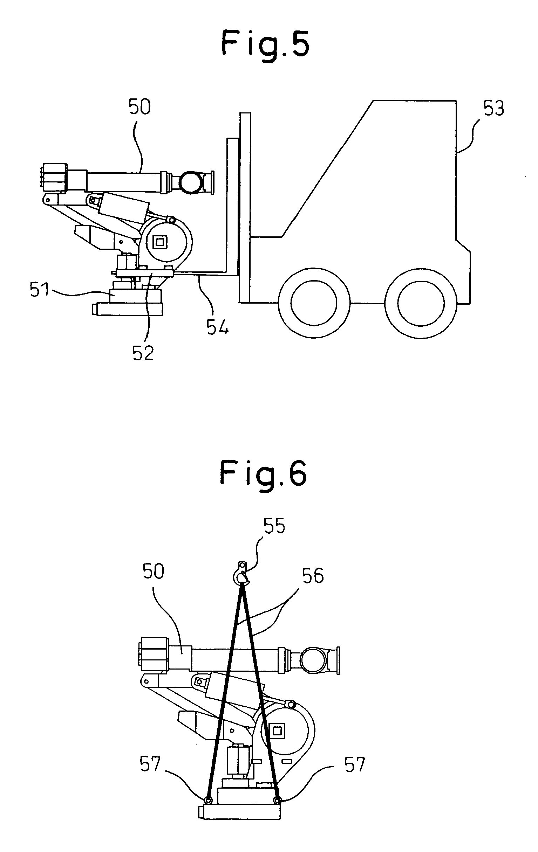

Fig. 5 is a view of a robot 50 being conveyed by a forklift 53. Bracket 52 is provided on robot 50 on the front side of forklift 53 so as to be held by forward projecting fork 54. Bracket 2 is provided near base 51 of robot 50. With fork 54 of forklift 53 inserted in bracket 52, the entire robot can be lifted by raising fork 54. At the time of conveyance, robot 50 is conveyed in a compact and balanced attitude, so-called conveyance attitude. This attitude is selected to minimize total height and total length etc. of robot 50 in order to prevent the robot 50 from tumbling during the conveyance and to increase the conveyance efficiency.

Fig. 6 is a view of robot 50 shown in Fig. 5 being conveyed by crane 55. In place of the bracket 52 shown in Fig. 5, a pair of eye bolts 57, 57 are provided on robot 50. With a rope 56 of the crane passed through the pair of eye bolts 57, 57, entire robot 50 is hung up by raising crane 55.

In an assembly line for automobiles or in a production line of construction material, robots of increasingly large size and high loading capacity are needed for enhancing conveying capability of robots and expanding the operational range of robots. However, when a robot is of large volume or of heavy weight, transport of robots by a truck or in a container, or conveyance of robots by using a forklift or a crane in a factory may become difficult due to limitation of weight or size. Therefore, when a conveyable robot of super heavy weight is to be conveyed (transported), it is necessary to decompose the robot into multiple units for conveyance.

An example of industrial robot consisting of multiple decomposable units in prior art is known from the disclosure in Japanese Patent Publication No. S62-277293. It is disclosed in this example of prior art that "an industrial robot 1 is composed of a plurality of modules 2, 3, 4 having operational functions which can be assembled and installed on a base or working stage 5 for installation".

When a conveyable robot of super heavy weight is to be conveyed, the robot needs to be decomposed into multiple units for conveyance, and if the individual units are not provided with brackets or eye bolts, it may become a problem that much time is consumed in preparation of load for lifting or hanging up of the units.

Further, when individual units are to be assembled into the robot at the installation site, much time may be consumed in connection of cables wired on individual units. It is also a problem that, if a servo motor is mounted to a unit, the position information may have to be set anew.

### SUMMARY OF THE INVENTION

It is an object of the present invention to provide an industrial robot that can be decomposed into multiple units and can be thereby conveyed efficiently and safely.

Also, it is an object of the present invention to provide an industrial robot which, when multiple units are to be assembled into the robot at the installation site, permits connection of cables wired on individual units to be carried out easily, and permits the position information of a servo motor to be retained.

In order to attain above objects, in accordance with an aspect of the present invention, there is provided an industrial robot that can be decomposed into multiple units which can be individually conveyed or transported at the time of conveyance or transport of the robot, each of the units comprising a holding bracket for the unit to be held by conveyance means conveying the unit to the destination location.

In accordance with the above construction, even if the robot is of heavy weight and has a large volume, since the robot is composed of multiple units, it can be decomposed into individual units at the time of conveyance or transport, and can be conveyed in units. Therefore, the robot can be conveyed without replacing the conveyance means or modifying the existing conveyance means. Here, conveyance means are intended to mean equipment such as a forklift or a crane. Since, at the time of conveyance, the conveyance means hold the holding bracket provided on each of the individual units, conveyance operation can be carried out easily without wasting time in load preparation and each unit can be conveyed to the destination point with the unit held in a specified attitude. Therefore, the multiple units obtained by decomposition of the robot can be conveyed efficiently and safely without giving rise to problems such as tumbling of the units.

In the industrial robot as described above, it is also possible for the unit to further comprise a servo motor for operating the unit along the operating axis and an interface for cable in order to be detachably connected to a cable for supplying power to the servo motor. Since each of the individual units comprises a cable interface for connecting to a servo motor, the robot can be easily decomposed into individual units. When multiple units are to be assembled into one robot, cables wired on individual units can be easily connected.

In the industrial robot as described above, it is also possible for the unit to further comprise a battery such that the battery can be connected to the cable. By enabling the battery to be connected to the cable, the position information of the servo motor can be retained at the time of decomposition into multiple units. Therefore, when multiple units are to be assembled into one robot, time required for setting of the robot can be reduced.

### BRIEF DESCRIPTION OF THE DRAWINGS

The above and other objects, features and advantages of the present invention will become more evident from the following description of preferred embodiments thereof with reference to appended drawings, in which:
Fig. 1 is a perspective of an industrial robot according to an embodiment of the present invention;
Fig. 2 is a view for explaining how individual units of the industrial robot shown in Fig. 1 are conveyed by using a crane or a forklift;
Fig. 3 is a perspective view of cables wired on the same industrial robot shown in Fig. 1;
Fig. 4 is a view showing comparison of height of the same industrial robot shown in Fig. 1 with individual units composing the industrial robot;
Fig. 5 is a view for explaining how an industrial robot is lifted and conveyed by a forklift; and
Fig. 6 is a view for explaining how an industrial robot is hung up and conveyed by a crane.

### DETAILED DESCRIPTION

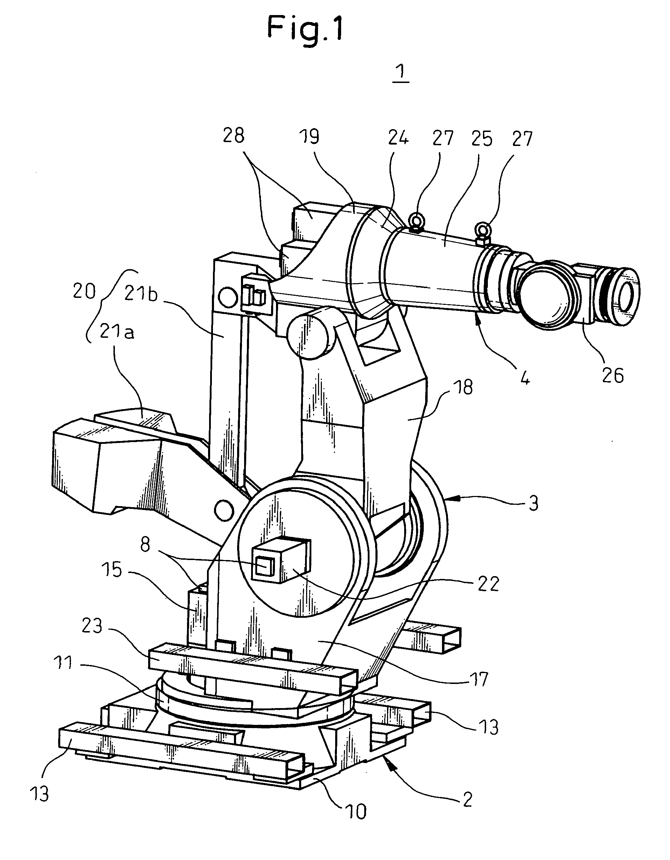

Now, the present invention will be described in detail below with reference to drawings. Fig. 1 is a view of an industrial robot (hereinafter referred to as "robot") according to an embodiment of the present invention. Robot 1 is not particularly limited, and may be a general 6-axes vertical multi-junction type conveyable robot. Robot 1 has three units 2, 3, 4, that is, base unit 2, arm unit 3, and hand unit 4, to which robot 1 can be decomposed at the time of conveyance.

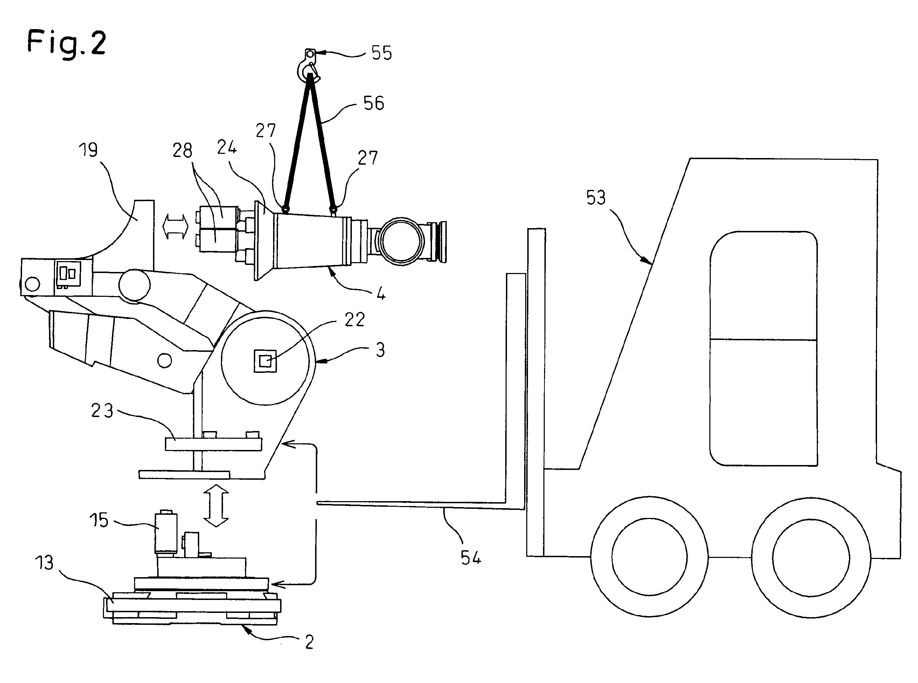

In Fig. 2, robot 1 is shown as being decomposed into three units 2, 3, 4. Individual units 2, 3, 4 has servo motors 15, 22, 29, 28 for operating the units in the direction of specified operational axes, connectors (cable interface) 8 for detachably connecting cables 5 for supplying power to the servo motors. Thus, each of individual units 2, 3, 4 is composed of a functional unit comprising at least one servo motor. Power can be supplied from batteries 14, 30, 31 via connector 8 to servo motors 15, 22, 29, 28. Therefore, when robot 1 is conveyed in units, position information of servo motors 15, 22, 29, 28 can be obtained.

Base unit 2 has fixing base 10 fixed to the floor, turntable 11 pivotally supported about a vertical axis perpendicular to fixing base 10, table reduction gear 12 provided between fixing base 10 and turntable 11, servo motor 15 for rotating turntable 11, and a pair of brackets (holding bracket) 13, 13. Position of brackets 13 is not particularly limited, and is selected on both sides of fixing base 10 in the present embodiment. Tubular bracket 13 is not particularly limited in shape and dimension, and can be formed in any shape and dimension corresponding to fork 54 of forklift 53. Thus, when base unit 2 is conveyed by fork lift 53, base unit 2 can be easily conveyed without consuming time for loading preparation.

Arm unit 3 has turning base 17 interconnected detachably to turntable 11, upper arm 18 that follows turning base 17, servo motor 22 for driving upper arm 18, casing 19 that follows upper arm 18, link mechanism 20 for reinforcing upper arm 18, and a pair of brackets (holding brackets) 23, 23. Upper arm 18 is attached at one end thereof to turning base 17 rotatably about a horizontal axis. Link mechanism 20 has first parallel link 21a, servo motor 29 for driving first parallel link 21a, and second parallel link 21b. A pair of lift brackets 23, 23 has the same tubular shape as bracket 13 of base unit 2. When arm unit 3 is to be conveyed by forklift 53, forks 54 of forklift 53 are inserted into the pair of bracket 23, 23 for lifting.

Position for fixing bracket 23 is not particularly limited, and in the present embodiment, brackets 23 are fixed on both sides of turning base 17 under unit 3. Since brackets 23 are positioned under unit 3, unit 3 is easy to be conveyed by forklift 53. Taking into account the conveyance attitude of unit 3, brackets 23 are preferably provided at positions near the center of gravity of unit 3.

Hand unit 4 has gear box 24 detachably interconnected to casing 19, forearm 25 that follows gear box 24, wrist element 26 that follows forearm 25, servo motor 28 for driving forearm 25 and wrist element 26, and a pair of eye bolts (holding brackets) 27. Forearm 25 is interconnected at proximal end thereof to the other end of upper arm 18 rotatably about a horizontal axis. To the distal end of forearm 25, the wrist element 26 is connected rotatably about an axis parallel to the axis of forearm 25. An conveyance hand designed in the specification corresponding to the conveyed work piece can be mounted to wrist element 26. The conveyance hand is rotatably connected to wrist element 26.

Hand unit 4 is provided with eye bolts 27 for passing a rope therethrough. Thus, unlike base unit 2 or arm unit 3, hand unit 4 is adapted to be hung up and conveyed by crane 55. Whether forklift 53 is used or crane 55 is used as conveyance means, depends upon factors such as the specification or size of units 2, 3, 4, and upon the layout of the factory, and is not limited to conveyance mode of the present embodiment. Therefore, it is also possible to provide eye bolts on base unit 2 or arm unit 3 for hanging by crane 55, or to provide brackets on hand unit 4 for lifting by forklift 53. It is also possible to provide both brackets for lifting by forklift 53 and eye bolts for hanging by crane 55 on each of units 2, 3, 4.

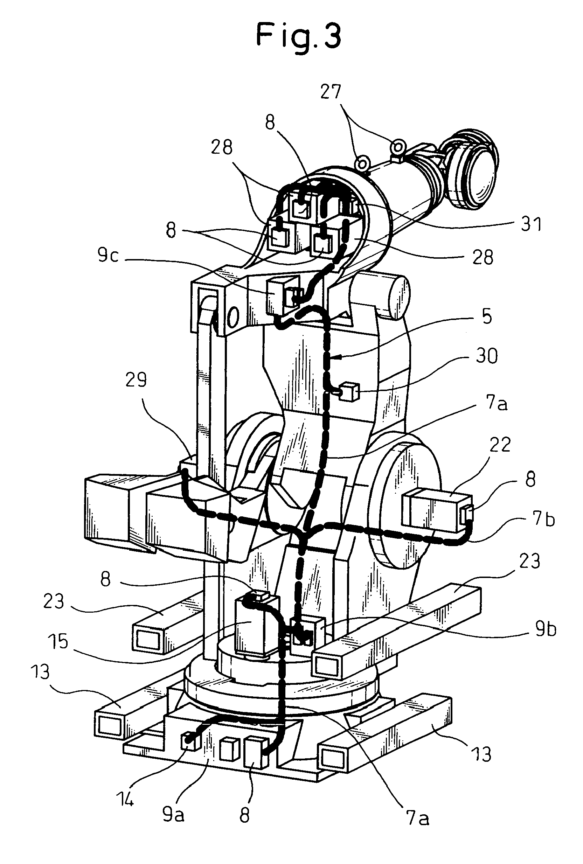

Next, Fig. 3 shows cables 5 wired on the rear side of robot 1. Cables 5 are connected to servo motors 15, 22, 29, 28, distribution panels 9a, 9b, 9c, and batteries 14, 30, 31 by using connectors. Cables 5 have trunk cables 7a and guy cables 7b. Cables 7a, 7b may include power supply lines for supplying power to servo motors 15 22, 29, 28, signal lines for transmitting signal between servo motors 15 22, 29, 28 and an unshown controller, and connectors connected to the ends of the power supply lines and signal lines. Trunk cables 7a and guy cables 7b can be joint-connected via the connectors. Trunk cables 7a are wired between first distribution panel 9a and second distribution panel 9b, and between second distribution panel 9b and third distribution panel 9c. Guy cables 7b branch from trunk cable 7a and are connected to individual servo motors 15, 22, 28, 29.

Base unit 2 is provided with battery 14 so that, when unit 2 is decomposed, the position information of servo motor 15 for driving turntable 11 can be retained in advance. Arm unit 3 is also provided with battery 30 so that the position information of servo motors 22, 29 for driving upper arm 18 and link mechanism 20 can be retained. Similarly, hand unit 4 is also provided with battery 31 so that the position information of servo motors 28 for driving wrist element 26 and the conveyance hand can be retained. Therefore, when robot 1 is assembled, time required for setting robot 1 can be reduced.

Connection of various cables 5 to servo motors 15, 22, 29, 28 and to distribution panels 9a, 9b, 9c is done via connectors (interfaces for cable) 8. Therefore, when individual units 2, 3, 4 are conveyed, individual units 2, 3, 4 can be easily decomposed by releasing the connector connection of cables 5 to connectors 8. When units 2, 3, 4 are assembled into one robot, the cables wired to individual units 2, 3, 4 can be easily connected to servo motors 15, 22, 29, 28.

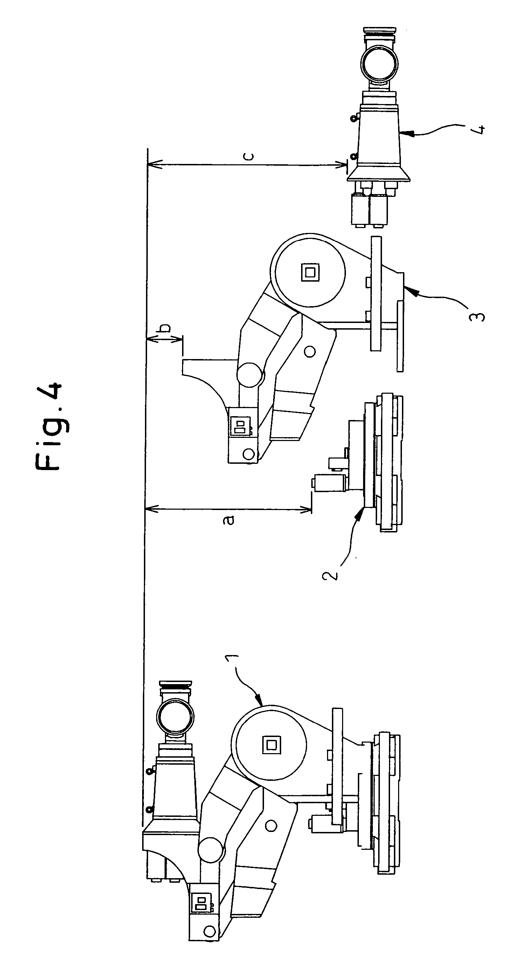

Fig. 4 shows height of assembled robot 1 is compared with the height of individual units 2, 3, 4 that compose robot 1. As compared to assembled robot 1, base unit 2 is lower by height a, arm unit 3 is lower by height b, and hand unit 4 is lower by height c. Thus, even if robot 1 is of larger size in itself, by decomposing robot 1, the trucks and containers for long distance transport, and forklift 53 and crane 55 for conveyance in the factory can be used unaltered, so that robot 1 can be conveyed efficiently at small cost.

The present invention is not limited to the above-described embodiment, but can be carried out in various modifications without departing from the scope and spirit of the present invention.

## Claims

1. An industrial (1) capable of being decomposed into multiple units (2, 3, 4) at a time of conveyance of the robot and being conveyed individually in units:
**characterized in that** each of said units (2, 3, 4) comprises a holding bracket (13, 23) for conveyance means to hold said unit in order to convey said unit.

2. An industrial robot (1) according to claim 1,
**characterized in that** each of said units (2, 3, 4) further comprises a servo motor (15, 22, 28, 29) and a cable interface (8) for detachably connecting a cable (5) for supplying power to said servo motor.

3. An industrial robot (1) according to claim 2,
**characterized in that** each of said units (2, 3, 4) further comprises a battery (14, 30, 31), said battery being capable of being connected to said cable (5).
